# EUROPEAN PATENT SPECIFICATION

(11) **EP 2 449 029 B1**
(45) Date of publication and mention of the grant of the patent: **24.07.2013**
(21) Application number: 10725443.5
(22) Date of filing: 15.06.2010
(51) Int. Cl.: C08L 69/00, C08K 5/00, H01B 3/42

(54) **POLYMER COMPOSITION AND CABLE COVER OF THAT COMPOSITION**
Polymerzusammensetzung und Kabelhülle aus dieser Zusammensetzung
Composition de polymère et enveloppe de câble de cette composition

(30) Priority: 03.07.2009 EP 09164518
(43) Date of publication of application: 09.05.2012
(73) Proprietor: DSM IP Assets B.V., 6411 TE Heerlen (NL)
(72) Inventor: SCHMIDT, Angelika, 52538 Selfkant (DE); NIJENHUIS, Atze, Jan, NL-6132 HB Sittard (NL)
(74) Representative: Dorrestijn, Antoon
(86) International application number: PCT/EP2010/058382
(87) International publication number: WO 2011/000692

(56) References cited:
- EP-A- 0 846 712
- EP-A- 1 883 081
- WO-A-2009/065755
- US-A1- 2007 197 696
- DATABASE WPI Week 199725 Thomson Scientific, London, GB; AN 1997-281002 XP002545444 & WO 97/17403 A (KANEKA CORP) 15 May 1997 (1997-05-15)

## Description

The invention relates to a flame retardant polymer composition containing a copolyester elastomer containing
a) hard polyester segments made up of repeating units derived from an aliphatic diol and an aromatic dicarboxylic acid,
b) soft polyester segments containing repeating units derived from an aliphatic carbonate.

Such a composition is known from EP-A-0846712. The copolyester elastomer shows good mechanical properties and has superior thermal and hydrolytical stability. Compositions containing the copolyester elastomer find therefore application in all kind of fields, inter alia in the field of electrics and electronics, especially as cover for cables, for example cables for connecting devices to computers, such as for example automotive cables, railway cables, heating cables, and industrial cables, e.g. used in robotics, off-shore, umbilicals or geological oil and gas exploration.

For many applications it is important that the composition shows flame retardant properties. In EP-A-0846712 it is said that flame retardants to be used in the composition are inter alia melamine, melamine condensates and melamine compounds, for example melam, melamine phosphate and melamine cyanurate and halogenated organic compounds, for example polybromostyrene. Further it is said that the use of halogen-free compounds is preferred, particularly for electrical applications.

EP1883081 discloses insulating layers for wires made of a jacket consisting of halogen-free flame retardant thermoplastic compositions.

US2007/197696 discloses polyesters with good flame resistance having lower loadings of flame resistant additives to achieve the desired flame resistant properties while simultaneously maintaining the mechanical properties.

If in the composition flame retardants are used it is a problem that the good mechanical properties of the polymer deteriorate. This is especially true if the composition is used as a cover for an electrical cable. Here the demands are severe and the loads of flame retardants must therefore be high. In that case tensile strength deteriorates, but also problems occur with abrasion resistance.

Object of the present invention is to provide a flame retardant composition containing the copolyester elastomer, which composition shows an adequate level of flame retardancy, while maintaining the mechanical properties of the copolyester elastomer at an acceptable level.

Surprisingly this object is achieved with a flame retardant composition containing
A) a copolyester elastomer containing
   a) hard polyester segments made up of repeating units derived from an aliphatic diol and an aromatic dicarboxylic acid,
   b) soft polyester segments containing repeating units derived from an aliphatic carbonate,
B) 0 - 30 parts of one or more further polymers,
C) 1 -15 parts of a halogen containing flame retardant.
D) 0 - 15 parts of a halogen-free flame retardant,
wherein sum of the components A, B, C and D is 100 parts.

Surprisingly by the use of a halogen containing flame retardant in the prescribed amount a composition is obtained that both shows good fire retardancy and good mechanical properties, especially ultimate mechanical properties, in particular the elongation at break.

Also the abrasion resistance, especially the needle abrasion resistance is maintained at a very high level.

In one preferred embodiment the composition according to the invention contains
A) a copolyester elastomer containing
   a) hard polyester segments made up of repeating units derived from an aliphatic diol and an aromatic dicarboxylic acid,
   b) soft polyester segments containing repeating units derived from an aliphatic carbonate,
B) 0 - 30 parts of one or more further polymers,
C) 5 -15 parts of a halogen containing flame retardant system,
D) 0 - 10 parts of a halogen-free flame retardant system,
wherein sum of the components A, B, C and D is 100 parts. More preferably C is 7-12 parts. More preferably the amount of D is 0-5 parts, even more preferably 0-3 parts, most preferably no halogen free flame retardant system is present at all.

Advantages of this composition are that the mechanical properties are almost as good as those of the composition without the flame retardants, while an acceptable level of flame retardency is obtained. Even after extensive heat aging the mechanical properties stay on a very high level, while known flame retardant polymer compositions are especially weak on this point.

In another preferred embodiment the composition according to the invention contains
A) a copolyester elastomer containing
   a) hard polyester segments made up of repeating units derived from an aliphatic diol and an aromatic dicarboxylic acid,
   b) soft polyester segments containing repeating units derived from an aliphatic carbonate,
B) 0 - 30 parts of one or more further polymers,
C) 1 - 3 parts of a halogen containing flame retardant system.
D) 5 - 15 parts of a halogen-free flame retardant system,

More preferably the composition contains 1 - 2 parts of a halogen containing flame retardant composition. More preferably the content of the halogen free flame retardant system is 5 - 10 parts.

Advantages of this composition are that it combines good mechanical properties and an adequate level of flame retardancy with a low smoke density and smoke toxicity.

### A. The copolyester elastomer.

The repeating ester units of the hard polyester segments a) are derived from at least one aromatic dicarboxylic acid and at least one aliphatic diol. Suitable aromatic dicarboxylic acids include inter alia isophthalic or terephthalic acid, 2,6-naphthalenedicarboxylic acid and 4,4'-diphenyldicarboxylic acid. Also very suitable is a mixture of 4,4'-diphenyldicarboxylic acid and 2,6-naphthalenedicarboxylic acid or a mixture of 4,4'-diphenyldicarboxylic acid and terephthalic acid. The mixing ratio between the two carboxylic acids is preferably chosen between 40:60 - 60:40 on weight basis.

Suitable aliphatic diols for the hard segment a) are inter alia the alkylene glycols. The number of C atoms in the alkylene radical is preferably 2 - 6. Ethylene glycol, propylene glycol and butylene glycol are preferred. Butylene glycol is most preferred.

A polyester elastomer containing repeating butylene terephthalate units in the hard segment a) is the most preferred.

The soft polyester segment b) is made up of repeating units from at least one alkylene carbonate.

Preferably as alkylene carbonate repeating unit is represented by the formula 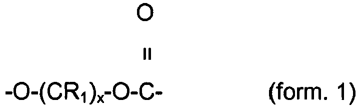 where R₁= H, alkyl or aryl.
X=2-20.
Preferably R = H and x = 6 and the alkylene carbonate is therefore hexamethylene carbonate.

The polyester segment b) may, next to the units from at least one aliphatic carbonate, contain repeating units derived from an aliphatic diol, and an aliphatic dicarboxylic acid or repeating units derived from a lactone. If the polyester segment b) contains such repeating units it is preferably up to 60 weight %.

The copolyester elastomer may next to soft segments b) also contain soft segments c) derived from an aliphatic diol and an aliphatic dicarboxylic acid. The aliphatic diol used in b) and c) is preferably an alkylene diol containing 2 - 20C atoms, more preferably 3 - 15C atoms in the chain. The aliphatic dicarboxylic acid used in b) and c) is preferably an alkylene dicarboxylic acid containing 2 - 20C atoms, preferably 4 - 15C atoms in the chain. Preferably c) contains butylene adipate as repeating unit.

The copolyester elastomer may next to soft segments b) also contain soft segments d) derived from a lactone. The lactone used in b) and d) is preferably polycaprolactone.

The contents of hard segments and soft segments may vary within wide limits and are primary determined by the desired mechanical properties. Copolyester elastomers having a high content of hard segments have a greater rigidity and higher melting point. On the other hand copolyester elastomers having a low content of hard segments are much more flexible and have a lower melting point. The weight ratio between hard segments and soft segments in the copolyester elastomer may vary between 20:80 and 90:10, preferably between 30:70 and 80:20.

The hard and soft segments may suitably be bonded via ester bonds to form copolyesterester units and said copolyesterester units being joined to one another by e) a urethane group having the formula

R₂(NHCO)ₚ

Where R₂ = an alkyl, aryl or aralkyl group and p = 2 or 3.

The content of e) is usually between 4 and 6 wt. % based on the total of the copolyester elastomer.

Usual diisocyanates used to form the urethane group are inter alia paratoluene diisocyanate, diphenylmethane diisocyanate (MDI), xylene diisocyanate, hexamethylene diisocyanate and isophorone diisocyanate.

Preparation of the copolyester elastomer is for instance described in EP-A-0846712 and a suitable preparation method may contain the steps of:
1. reacting polyester hard segment a) with an aromatic dicarboxylic acid, an aliphatic polycarbonate diol segment b) and if desired an aliphatic polyester segment c) and/or a polylactone segment e) with one another in the presence of a catalyst at elevated temperature for a limited period of time, while removing any volatile reaction products formed.
2. Deactivating the catalyst at least partially.
3. Adding a difunctional and/or a trifunctional isocyanate to block the copolyesterester under 1 and continuing the reaction.

### B. One or more further polymers

The one or more further polymers may be any kind of polymer compatible with the copolyester elastomer. Preferably the composition contains polybutylene terephthalate as further polymer. In that case a composition according to the invention is obtained that shows a very good resistance against wear. This is advantages for the application in cover for cables.
Preferably the composition contains 5 - 30 parts, more preferably 15 - 25 parts of the polybutylene terephthalate.

### C. Halogen containing flame retardant system

The halogen containing flame retardant system contains a halogenated organic compound, preferably brominated organic compound. Brominated aromatic compounds are even more preferred for their better stability. Suitable examples include low molar mass brominated compounds, such as ethylene bistetrabromophtalimide, pentabromobenzylacrylate, ethylene bispentabromophenyl, tetrabromobisphenol-A, and bromine-containing oligomers or polymers, like a polycarbonate from brominated bisphenol-A, brominated polystyrene, or poly(bromostyrene). Preferred are those compounds that show good thermal stability, and that are not suspect of producing dioxins at high temperatures, including for example ethylene bistetrabromophtalimide, pentabromobenzylacrylate, or poly(bromostyrene). Most preferably ethane-1,2-bis(pentabromophenyl) is used (sold as Saytex 8010, by Albermarle). Advantage is that it is highly effedctive, so that a relatively lower concentration may be used, which is favorable for all kind of properties. Moreover it provides a polymer composition which is even more thermally stable.

It is also possible that the bromine-containing flame-retardant compound is a poly(bromostyrene) (PBS). PBS differs from brominated polystyrene in that it is produced by polymerizing brominated styrene monomer, and not by brominating polystyrene. In addition to its favorable stability, preventing e.g. blooming effects and corrosion of contacted metals, the use of this compound also results in improved melt-flow behavior of the polyester composition. A high molar mass of PBS results in a polymer composition with improved mechanical properties, whereas the lower the molar mass the better the melt-flow. Therefore, the poly(bromostyrene) preferably has a weight averaged molar mass (M_{w}) of 20.000-100.000 g/mol. In general, the higher the bromine content of the compound the less flame-retardant additive is needed to obtain the desired flammability behavior of the polyester composition. This is of advantage for other properties like toughness. Thus, in a preferred embodiment the poly(bromostyrene) has a bromine content of 61-65 mass %.

Next to the halogen containing flame retardant the halogen containing flame retardant system composition according to the invention may contain a synergist, for example an antimony oxide, preferably antimony trioxide. The ratio halogen containing flame retardant: synergist preferably is between 3 : 1 and 1 : 1, more preferably between 2.5 ; 1 and 1.5 : 1. The halogen containing flame retardant system preferably exists of the halogen containing flame retardant and the synergist.

### D. Halogen free flame retardant system

The halogen free flame retardant system suitable contains a nitrogen containing, a phosphorus containing and/or a nitrogen/phosphorus containing flame retardant.

Preferred halogen free flame retardants include nitrogen or nitrogen/phosphor containing flame retardants. Suitable nitrogen containing and nitrogen/phosphor containing compounds that can be used as component are described, for example in PCT/EP97/01664, DE-A-197 34 437, DE-A-197 37 72, and DE-A-196 14 424.

Preferably, the nitrogen containing flame retardant is chosen from the group consisting of benzoguanamine, tris(hydroxyethyl)isocyanurate, allantoine, glycouril, melamine, melamine cyanurate, dicyandiamide, guanidine and carbodiimide, and derivatives thereof.

More preferably, the nitrogen containing compound comprises a condensations product of melamine. Condensation products of melamine are, for example, melem, melam and melon, as well as higher derivatives and mixtures thereof. Condensations products of melamine can be produced by a method as described, for example, in PCT/WO 96/16948.

Preferably, the nitrogen/phosphor containing compound is a reaction product of melamine with phosphoric acid and/or a condensation product thereof. With the reaction product of melamine with phosphoric acid and/or a condensation product thereof are herein understood compounds, which result from the reaction of melamine or a condensation product of melamine, for example, melem, melam and melon, with a phosphoric acid.

Examples include dimelaminephosphate, dimelamine pyrophosphate, melamine phosphate, melamine polyphosphate, melamine pyrophosphate, melamine polyphosphate, melam polyphosphate, melon polyphosphate and melem polyphosphate, as are described for example in PCT/WO 98/39306. More preferably the nitrogen/phosphor containing flame retardant is melamine polyphosphate.

Preferably as nitrogen or nitrogen/phosphor containing compound melamine cyanurate or melamine polyphosphate are used. Most preferably melamine cyanurate is used.

### E. Further additives

The composition suitably may contain all kind of further additives, like for example antioxidants, dyes or pigments, UV absorbers, hydrolytic stabilizers, antistatic agents, fillers, lubricants etc. Examples of fillers include cellulose powder and polysaccharide powder, like corn starch powder. The polymeric compositions contains preferably less than 15 parts, more preferably less than 10 parts of further additives at 100 parts of A + B + C + D.

During evaluation of flammability behavior according to the UL-94 test, dripping of molten polyester composition during flaming may prevent a V-0 classification. For this purpose up to 5 parts at 100 parts of A + B + C + D of polytetrafluoroethylene (PTFE) may be added as anti-dripping agent to a flame-retarded composition. Preferably the PTFE content in the polyester composition is 0.25-2 mass %. The advantage is a good balance of flammability and other properties. In addition, it was found that upon adding PTFE the amount of flame-retardant additives, e.g. PBS and antimony trioxide, can be lowered without deteriorating flammability behavior. PTFE appears to acts as a synergistic agent. This not only is beneficial for mechanical properties, it also reduces the relative density of the composition and makes it more economic.

Preferably the composition consists of the components A, B, C D and E in the quantities as stated above.

The composition according to the invention is very suitable for application in cable cover, especially in cable covers having a wall thickness below 0.6 mm, preferably below 0.4 mm, more preferably below 0.3 mm, even more preferably below 0.25 mm.

The invention is further explained by hands of the examples, without being restricted thereto.

### Materials

A. Arnitel™ CM551, copolyester elastomer according to the definition of component, deliverd by DSM in the Netherlands.
B. Arnite™ T04 201, PBT delivered by DSM in the Netherlands.
C1. Saytex 8010, bromine containing flame retardant (80wt% Br), delivered by Albermarle.
C2. antimony trioxide, delivered by campine.
D. Mecy, melaminecyanurate, delivered by 3V.

### Compounding

Dry blends of compositions as indicated in table 1 according to the examples and comparative experiments were prepared in a tumbler. The dry blends were dosed to ZSK 25 mm twin screw extruder and melt processed with a screw speed of 400 rpm, throughput of 25 kg/hr, and melt temperature of 280 °C. The melt is transported through a granulation die. The granules obtained in this way were dried for 4 hours at a temperature of 120°C, prior to further use.

Test samples were produced by injection molding and the following properties were determined:
- Flame retardancy by 45°C burning test according to ISO 6722.
- Mechanical properties, elongation at break and tensile strength according to ISO 527-1/-2.

The Mechanical properties were measured on the samples as such and on the samples after heat aging for 1000H at 185°C in an oven with hot air circulation. -Needle abrasion resistance according to ISO 6722 on 0.35 mm² FLR cable and the ultra thin 0.35 mm² FLUR cable.

### Examples 1 - 3 and comparative experiments A and B

Compositions and results are given in table 1.

### Discussion of the results

Comparative experiment B is a composition without flame retardant. The mechanical properties are at a high level.

In comparative experiment A the composition only contains a halogen free flame retardant, the flame retardancy is at the required level, however the mechanical properties are poor, especially after heat aging.

In the examples according to the invention it is shown that both the flame retardancy and the mechanical properties are at a good level. The mechanical properties even approach the level of comparative experiment B, without any flame retardant. Example 2, wherein the composition also contains PBT shows the highest level of abrasion resistance, it even passes the ISO6722 abrasion test for ultra thin cables.

**Table 1.**

| | Comparative Experiments | | Examples | | |
|---|---|---|---|---|---|
| | A | B | 1 | 2 | 3 |
| Arnitel CM551 (wt.%) | 77.50 | 100.00 | 92.50 | 72.50 | 91.00 |
| | | | | | |
| Arnite PBT (T04 201) (wt. %) | | | | 20 | |
| Mecy (wt. %) | 22.50 | | 0.00 | 0.00 | 7.50 |
| Saytex8010 (wt. %) | 0.00 | | 5.00 | 5.00 | 4.00 |
| Sb2O3 (wt. %) | 0.00 | | 2.50 | 2.50 | 0.50 |
| | | | | | |
| ISO 6722 45° burning | Pass | Fail | pass | pass | Pass |
| elongation at break (%) | 181 | 450 | 379 | 379 | 326 |
| tensile strength (MPa) | 18.5 | 32 | 28 | 27 | 24 |
| elongation at break (%) after heat ageing (185°C, 1000h) | 13 | 220 | 150 | 140 | 145 |
| ISO 6722 needle abrasion resistance (0.35 FLR cable) | fail | Pass | pass | pass | Pass |
| ISO 6722 needle abrasion resistance (0.35 FLUR cable) | fail | | fail | pass | Fail |

## Claims

1. Flame retardant polymer composition containing:
A) a copolyester elastomer containing
a) hard polyester segments made up of repeating units derived from an aliphatic diol and an aromatic dicarboxylic acid,
b) soft polyester segments containing repeating units derived from an aliphatic carbonate,
B) 0 - 30 parts of one or more further polymers,
C) 1 -15 parts of a halogen containing flame retardant.
D) 0 - 15 parts of a halogen-free flame retardant,
wherein sum of the components A, B, C and D is 100 parts.

2. Flame retardant polymer composition according to claim 1, **characterized in that**, the composition contains
A) a copolyester elastomer containing
a) hard polyester segments made up of repeating units derived from an aliphatic diol and an aromatic dicarboxylic acid,
b) soft polyester segments containing repeating units derived from an aliphatic carbonate,
B) 0 - 30 parts of one or more further polymers,
C) 5 -15 parts of a halogen containing flame retardant system,
D) 0 - 10 parts of a halogen-free flame retardant system,
wherein sum of the components A, B, C and D is 100 parts.

3. Flame retardant polymer composition according to claim 2, **characterized in that** the composition contains C) 7 - 12 parts of the halogen containing flame retardant system.

4. Flame retardant polymer composition according to claim 2 or 3, **characterized in that** the composition contains D) 0 - 5 parts of halogen free flame retardant system.

5. Flame retardant polymer composition according to claim 1 containing:
A) a copolyester elastomer containing
a) hard polyester segments made up of repeating units derived from an aliphatic diol and an aromatic dicarboxylic acid,
b) soft polyester segments containing repeating units derived from an aliphatic carbonate,
B) 0 - 30 parts of one or more further polymers,
C) 1 - 3 parts of a halogen containing flame retardant system.
D) 5 - 15 parts of a halogen-free flame retardant system,
wherein sum of the components A, B, C and D is 100 parts.

6. Flame retardant polymer composition according to claim 5, **characterized in that** the composition contains C) 1 - 2 parts of the halogen containing flame retardant system.

7. Flame retardant polymer composition according to claims 5 or 6, **characterized in that** the composition contains D) 5 - 10 parts of the halogen free flame retardant system.

8. Flame retardant composition according to any one of claims 1 - 7, **characterized in that** the composition contains 5 - 30 parts of polybutylene terephthalate.

9. Cable containing a cover according to any one of claims 1 -8.

10. Cable according to claim 9, **characterized in that** the cover has a wall thickness of less than 0.6 mm.

## Patentansprüche

1. Flammwidrige Polymerzusammensetzung, enthaltend:
A) ein Copolyesterelastomer, enthaltend
a) Polyester-Hartsegmente aus Wiederholungseinheiten, die sich von einem aliphatischen Diol und einer aromatischen Dicarbonsäure ableiten,
b) Polyester-Weichsegmente mit Wiederholungseinheiten, die sich von einem aliphatischen Carbonat ableiten,
B) 0-30 Teile eines oder mehrerer weiterer Polymere,
C) 1-15 Teile eines halogenhaltigen Flammschutzmittels,
D) 0-15 Teile eines halogenfreien Flammschutzmittels,
wobei sich die Summe der Komponenten A, B, C und D auf 100 Teile beläuft.

2. Flammwidrige Polymerzusammensetzung nach Anspruch 1, **dadurch gekennzeichnet, dass** die Zusammensetzung
A) ein Copolyesterelastomer, enthaltend
a) Polyester-Hartsegmente aus Wiederholungseinheiten, die sich von einem aliphatischen Diol und einer aromatischen Dicarbonsäure ableiten,
b) Polyester-Weichsegmente mit Wiederholungseinheiten, die sich von einem aliphatischen Carbonat ableiten,
B) 0-30 Teile eines oder mehrerer weiterer Polymere,
C) 5-15 Teile eines halogenhaltigen Flammschutzsystems,
D) 0-10 Teile eines halogenfreien Flammschutzsystems,
enthält, wobei sich die Summe der Komponenten A, B, C und D auf 100 Teile beläuft.

3. Flammwidrige Polymerzusammensetzung nach Anspruch 2, **dadurch gekennzeichnet, dass** die Zusammensetzung C) 7-12 Teile des halogenhaltigen Flammschutzsystems enthält.

4. Flammwidrige Polymerzusammensetzung nach Anspruch 2 oder 3, **dadurch gekennzeichnet, dass** die Zusammensetzung D) 0-5 Teile halogenfreies Flammschutzsystem enthält.

5. Flammwidrige Polymerzusammensetzung nach Anspruch 1, enthaltend:
A) ein Copolyesterelastomer, enthaltend
a) Polyester-Hartsegmente aus Wiederholungseinheiten, die sich von einem aliphatischen Diol und einer aromatischen Dicarbonsäure ableiten,
b) Polyester-Weichsegmente mit Wiederholungseinheiten, die sich von einem aliphatischen Carbonat ableiten,
B) 0-30 Teile eines oder mehrerer weiterer Polymere,
C) 1-3 Teile eines halogenhaltigen Flammschutzsystems,
D) 5-15 Teile eines halogenfreien Flammschutzsystems,
wobei sich die Summe der Komponenten A, B, C und D auf 100 Teile beläuft.

6. Flammwidrige Polymerzusammensetzung nach Anspruch 5, **dadurch gekennzeichnet, dass** die Zusammensetzung C) 1-2 Teile des halogenhaltigen Flammschutzsystems enthält.

7. Flammwidrige Polymerzusammensetzung nach Anspruch 5 oder 6, **dadurch gekennzeichnet, dass** die Zusammensetzung D) 5-10 Teile des halogenfreien Flammschutzsystems enthält.

8. Flammwidrige Zusammensetzung nach einem der Ansprüche 1-7, **dadurch gekennzeichnet, dass** die Zusammensetzung 5-30 Teile Polybutylenterephthalat enthält.

9. Kabel mit einer Deckschicht gemäß einem der Ansprüche 1-8.

10. Kabel nach Anspruch 9, **dadurch gekennzeichnet, dass** die Deckschicht eine Wanddicke von weniger als 0,6 mm aufweist.

## Revendications

1. Composition polymère ignifuge contenant :
A) un élastomère copolyester contenant
a) des segments de polyester durs constitués d'unités de répétition dérivées d'un diol aliphatique et d'un acide dicarboxylique aromatique,
b) des segments de polyester mous contenant des unités de répétition dérivées d'un carbonate aliphatique,
B) 0-30 parties d'un ou plusieurs polymères additionnels,
C) 1-15 parties d'un agent ignifuge contenant un halogène,
D) 0-15 parties d'un agent ignifuge ne contenant pas d'halogène,
la somme des constituants A, B, C et D étant de 100 parties.

2. Composition polymère ignifuge selon la revendication 1, **caractérisée en ce que** la composition contient :
A) un élastomère copolyester contenant
a) des segments de polyester durs constitués d'unités de répétition dérivées d'un diol aliphatique et d'un acide dicarboxylique aromatique,
b) des segments de polyester mous contenant des unités de répétition dérivées d'un carbonate aliphatique,
B) 0-30 parties d'un ou plusieurs polymères additionnels,
C) 5-15 parties d'un système ignifuge contenant un halogène,
D) 0-10 parties d'un système ignifuge ne contenant pas d'halogène,
la somme des constituants A, B, C et D étant de 100 parties.

3. Composition polymère ignifuge selon la revendication 2, **caractérisée en ce que** la composition contient C) 7-12 parties du système ignifuge contenant un halogène.

4. Composition polymère ignifuge selon la revendication 2 ou 3, **caractérisée en ce que** la composition contient D) 0-5 parties du système ignifuge ne contenant pas d'halogène.

5. Composition polymère ignifuge selon la revendication 1, contenant :
A) un élastomère copolyester contenant
a) des segments de polyester durs constitués d'unités de répétition dérivées d'un diol aliphatique et d'un acide dicarboxylique aromatique,
b) des segments de polyester mous contenant des unités de répétition dérivées d'un carbonate aliphatique,
B) 0-30 parties d'un ou plusieurs polymères additionnels,
C) 1-3 parties d'un système ignifuge contenant un halogène,
D) 5-15 parties d'un système ignifuge ne contenant pas d'halogène,
la somme des constituants A, B, C et D étant de 100 parties.

6. Composition polymère ignifuge selon la revendication 5, **caractérisée en ce que** la composition contient C) 1-2 parties du système ignifuge contenant un halogène.

7. Composition polymère ignifuge selon les revendications 5 ou 6, **caractérisée en ce que** la composition contient D) 5-10 parties du système ignifuge ne contenant pas d'halogène.

8. Composition polymère ignifuge selon l'une quelconque des revendications 1 à 7, **caractérisée en ce que** la composition contient 5-30 parties de téréphtalate de polybutylène.

9. Câble comportant un revêtement selon l'une quelconque des revendications 1 à 8.

10. Câble selon la revendication 9, **caractérisé en ce que** le revêtement a une épaisseur de paroi inférieure à 0,6 mm.
